# EUROPEAN PATENT SPECIFICATION

(11) **EP 3 104 567 B1**
(45) Date of publication and mention of the grant of the patent: **19.02.2020**
(21) Application number: 14881932.9
(22) Date of filing: 18.11.2014
(51) Int. Cl.: H04L 27/26, H04L 5/00, H04W 72/04, H04W 74/00, H04W 74/04, H04W 74/08, H04W 84/12

(54) **METHOD AND APPARATUS FOR TRANSMITTING DATA UNIT IN WIRELESS LOCAL AREA NETWORK**
VERFAHREN UND VORRICHTUNG FÜR EINE DATENÜBERTRAGUNGSEINHEIT IN WLAN
PROCÉDÉ ET APPAREIL DE TRANSMISSION D'UNITÉ DE DONNÉES DANS UN RÉSEAU LOCAL SANS FIL

(30) Priority: 04.02.2014 US 201461935808 P; 01.04.2014 US 201461973269 P
(43) Date of publication of application: 14.12.2016
(73) Proprietor: LG Electronics Inc., Seoul 150-721 (KR)
(72) Inventor: CHOI, Jinsoo, Seoul 137-893 (KR); LEE, Wookbong, Seoul 137-893 (KR); CHO, Hangyu, Seoul 137-893 (KR); RYU, Kiseon, Seoul 137-893 (KR); CHUN, Jinyoung, Seoul 137-893 (KR); LIM, Dongguk, Seoul 137-893 (KR)
(74) Representative: Frenkel, Matthias Alexander
(86) International application number: PCT/KR2014/011053
(87) International publication number: WO 2015/119359

(56) References cited:
- WO-A1-2006/025631
- WO-A2-2011/145811
- US-A1- 2010 260 159
- US-A1- 2012 207 036
- US-A1- 2013 128 806
- US-A1- 2013 201 835
- US-A1- 2014 029 547
- Pietro Nicoletti: "IEEE 802.11 frame format", , 1 June 2005 (2005-06-01), pages 1-23, XP055083596, Retrieved from the Internet: URL:http://www.studioreti.it/slide/802-11- Frame_E_C.pdf [retrieved on 2013-10-11]

## Description

### BACKGROUND OF THE INVENTION

### Field of the invention

The present invention relates to wireless communications, and more particularly, to a method and an apparatus for transmitting a data unit a wireless local area network (WLAN).

### Related Art

Data is delivered through data units that are referred to as a PPDU(physical layer protocol data unit) of the IEEE 802.11. The PPDU may broadly include a PHY(physical) preamble, a PHY header, and a PSDU(Physical layer service data unit).

The PHY preamble is used for delivery, such as signal detection, time and frequency synchronization, channel estimation, and so on, and may include a training symbol. The PHY header may transmit a TXVECTOR. As a MPDU(MAC(medium access control) protocol data unit), the PSDU may correspond to information that is sent down from the MAC layer. As a data unit that is generated in the MAC layer, the MPDU may include a MAC header and a MSDU(MAC service data unit).

In a wireless local area network (WLAN) system, distributed coordination function (DCF) may be employed as a method enabling a plurality of stations (STAs) to share a wireless medium. DCF is based on a carrier sensing multiple access with collision avoidance (CSMA/CA).

Generally, in operations under a DCF access environment, when a medium is not occupied (that is, idle) for a DCF interframe space (DIFS) interval or longer, an STA may transmit a medium access control (MAC) protocol data unit (MPDU) to be urgently transmitted. When the medium is determined to be occupied according to a carrier sensing mechanism, an STA may determine the size of a contention window (CW) using a random backoff algorithm and perform a backoff procedure. The STA may select a random value in the CW to perform the backoff procedure and determine backoff time based on the selected random value.

When a plurality of STAs attempts to access a medium, an STA having the shortest backoff time among the STAs is allowed to access the medium and the other STAs may suspend the remaining backoff times and wait until the STA having accessed the medium finishes transmission. When the STA having accessed the medium finishes frame transmission, the other STAs contend again with the remaining backoff times to acquire a transmission resource. As such, in the existing WLAN system, one STA occupies the entire transmission resource through one channel to transmit/receive a frame to/from an AP.

US 2013/201835 A1 outlines systems and techniques relating to wireless communications. In the document a technique is described to include monitoring wireless communication channels, including a first channel and a second channel, to produce a monitoring output, determining a first transmission period for the first channel by applying a first waiting period duration and a second waiting period duration to the monitoring output, determining a second transmission period for the second channel by applying the first waiting period duration and the second waiting period duration to the monitoring output, causing, based on the first transmission period, a first transmission on the first channel to reserve the group of wireless communication channels, and causing, based on the second transmission period, a second transmission on the second channel and monitoring, after the end of the first transmission period, for an acknowledgement.

The document ("IEEE 802.11 frame format", Pietro Nicoletti) outlines an architecture and an OSI model for 802.11. In the document a frame format, a frame control field, frame types and transmission between stations in 802.11 are disclosed.

WO 2006/025631 A1 outlines a method and apparatus for performing a variable point Inverse Fast Fourier Transform (IFFT)/Fast Fourier Transform (FFT). In the document the apparatus for performing a variable point IFFT is described to include an IFFT interpolator generating interpolation data signals having a determined point and interpolating a plurality of interpolation data, the number of which depends on an IFFT operation mode signal into input data, an IFFT operator generating IFFT operation data signals by performing an IFFT operation for the interpolated data signals, an IFFT mode selector selecting and outputting some of the IFFT operation data signals in response to the IFFT operation mode signal so that the selected IFFT operation data have the same number of points as the input data, and a control unit outputting the IFFT operation.

### SUMMARY OF THE INVENTION

Preferred embodiments are provided as defined in the appended claims.

A legacy STA, which performs a non-orthogonal frequency division multiplexing access (OFDMA)-based operation on the basis of frequency division multiple access (FDMA) and time division multiple access (TDMA), and a non-legacy STA, which performs an OFDMA-based operation, may receive data units from an AP in the same time resource or different time resources. Further, communications through a network based on a WLAN may be performed in diverse environments by changing the size of a fast Fourier transform used to generate an existing PPDU and increasing the length of a cyclic prefix (CP).

### BRIEF DESCRIPTION OF THE DRAWINGS

FIG. 1 is a conceptual view illustrating a structure of a wireless local area network (WLAN).
FIG. 2 is a conceptual view illustrating operations of non-legacy stations (STAs) and a legacy STA that communicate with an access point (AP) based on frequency division multiple access (FDMA) according to an embodiment of the present invention.
FIG. 3 is a conceptual view illustrating operations of non-legacy STAs and a legacy STA that communicate with an AP based on FDMA according to an embodiment of the present invention.
FIG. 4 is a conceptual view illustrating operations of non-legacy STAs and a legacy STA that communicate with an AP based on time division multiple access (TDMA) according to an embodiment of the present invention.
FIG. 5 is a conceptual view illustrating a PPDU structure used for a non-legacy WLAN system according to an embodiment of the present invention.
FIG. 6 is a conceptual view illustrating OFDMA-based communication according to an embodiment of the present invention.
FIG. 7 is a conceptual view illustrating a structure of a non-legacy PPDU supported by a non-legacy WLAN system according to an embodiment of the present invention.
FIG. 8 is a conceptual view illustrating a structure of a non-legacy PPDU supported by a non-legacy WLAN system according to an embodiment of the present invention.
FIG. 9 is a conceptual view illustrating a structure of a non-legacy PPDU supported by a non-legacy WLAN system according to an embodiment of the present invention.
FIG. 10 is a conceptual view illustrating a structure of a non-legacy PPDU supported by a non-legacy WLAN system according to an embodiment of the present invention.
FIG. 11 is a conceptual view illustrating a structure of a non-legacy PPDU supported by a non-legacy WLAN system according to an embodiment of the present invention.
FIG. 12 is a conceptual view illustrating a structure of a non-legacy PPDU supported by a non-legacy WLAN system according to an embodiment of the present invention.
FIG. 13 is a conceptual view illustrating a downlink PPDU transmitted based on OFDMA according to an embodiment of the present invention.
FIG. 14 is a conceptual view illustrating a downlink PPDU transmitted based on OFDMA according to an embodiment of the present invention
FIG. 15 is a conceptual view illustrating a downlink PPDU transmitted based on OFDMA according to an embodiment of the present invention
FIG. 16 is a conceptual view illustrating a downlink PPDU transmitted based on OFDMA according to an embodiment of the present invention
FIG. 17 is a block diagram illustrating a wireless device according to an embodiment of the present invention.

### DESCRIPTION OF EXEMPLARY EMBODIMENTS

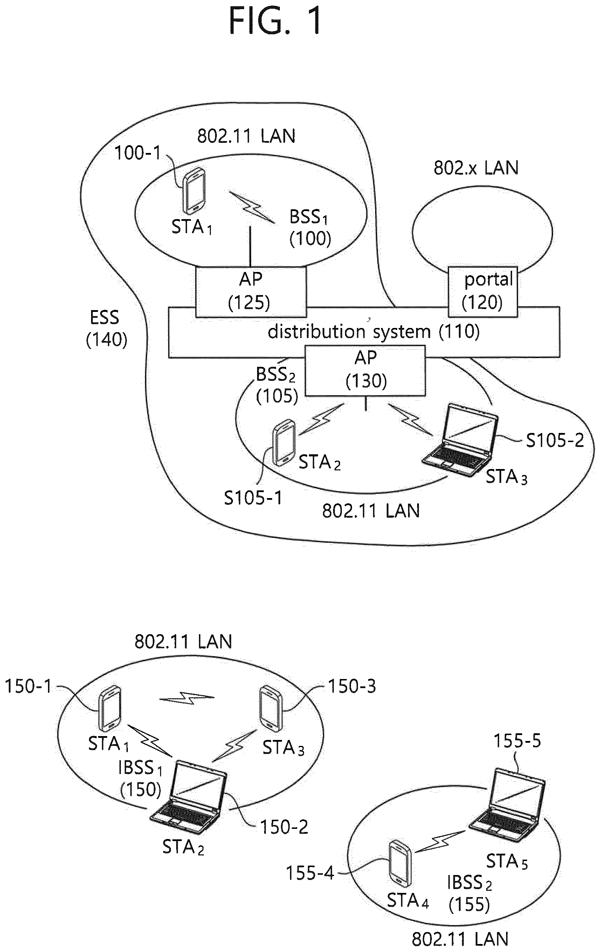

FIG. 1 is a conceptual view illustrating a structure of a wireless local area network (WLAN).

An upper part of FIG. 1 shows the structure of the IEEE (institute of electrical and electronic engineers) 802.11 infrastructure network.

Referring to the upper part of FIG. 1, the WLAN system may include one or more basic service sets (BSSs, 100 and 105). The BSS 100 or 105 is a set of an AP such as AP (access point) 125 and an STA such as STA1 (station) 100-1 that may successfully sync with each other to communicate with each other and is not the concept to indicate a particular area. The BSS 105 may include one AP 130 and one or more STAs 105-1 and 105-2 connectable to the AP 130.

The infrastructure BSS may include at least one STA, APs 125 and 130 providing a distribution service, and a distribution system (DS) 110 connecting multiple APs.

The distribution system 110 may implement an extended service set (ESS) 140 by connecting a number of BSSs 100 and 105. The ESS 140 may be used as a term to denote one network configured of one or more APs 125 and 130 connected via the distribution system 110. The APs included in one ESS 140 may have the same SSID (service set identification).

The portal 120 may function as a bridge that performs connection of the WLAN network (IEEE 802.11) with other network (for example, 802.X).

In the infrastructure network as shown in the upper part of Fig. 1, a network between the APs 125 and 130 and a network between the APs 125 and 130 and the STAs 100-1, 105-1, and 105-2 may be implemented. However, without the APs 125 and 130, a network may be established between the STAs to perform communication. The network that is established between the STAs without the APs 125 and 130 to perform communication is defined as an ad-hoc network or an independent BSS (basic service set).

A lower part of FIG. 1 is a conceptual view illustrating an independent BSS.

Referring to the lower part of FIG. 1, the independent BSS (IBSS) is a BSS operating in ad-hoc mode. The IBSS does not include an AP, so that it lacks a centralized management entity. In other words, in the IBSS, the STAs 150-1, 150-2, 150-3, 155-4 and 155-5 are managed in a distributed manner. In the IBSS, all of the STAs 150-1, 150-2, 150-3, 155-4 and 155-5 may be mobile STAs, and access to the distribution system is not allowed so that the IBSS forms a self-contained network.

The STA is some functional medium that includes a medium access control (MAC) following the IEEE (Institute of Electrical and Electronics Engineers) 802.11 standards and that includes a physical layer interface for radio media, and the term "STA" may, in its definition, include both an AP and a non-AP STA (station).

The STA may be referred to by various terms such as mobile terminal, wireless device, wireless transmit/receive unit (WTRU), user equipment (UE), mobile station (MS), mobile subscriber unit, or simply referred to as a user.

In the following embodiments of the present invention, data (or a frame or physical layer convergence procedure (PLCP) protocol data unit (PPDU)) transmitted from an AP to an STA may be represented by downlink data (or a downlink frame or downlink PPDU) and data (or a frame or PPDU) transmitted from an STA to an AP may be represented by uplink data (or an uplink frame or uplink PPDU). Also, transmission from an AP to an STA may be represented by downlink transmission and transmission from an STA to an AP may be represented by uplink transmission.

Next-generation WLANs need to be designed to have improved capabilities as compared with existing legacy WLAN systems. For next-generation WLANs, improvement in capabilities is necessary in various aspects, such as average throughput, average throughput for a BSS area, packet delays, packet loss, and goodput.

Hereinafter, an embodiment of the present invention discloses a WLAN system that has improved capabilities as well as satisfies backward compatibility with an existing legacy WLAN system.

The WLAN system according to the embodiment of the present invention may be referred to as a non-legacy WLAN system, and an STA supporting the non-legacy WLAN system may be referred to as a non-legacy STA. Further, the existing WLAN system may be referred to as a legacy WLAN system, and an STA supporting the legacy WLAN system may be referred to as a legacy STA.

The following embodiment of the present invention discloses the legacy WLAN system operating based on non-orthogonal frequency division multiplexing access (OFDMA) and the non-legacy WLAN system operating based on OFDMA. A method for satisfying backward compatibility with the legacy WLAN system according to the embodiment of the present invention may also be used even when the non-legacy WLAN system operates based on other access methods instead of OFDMA.

In non-OFDMA-based communication, one STA may occupy and use a frequency resource for communication in a time resource based on contention-based channel access, such as enhanced distributed channel access (EDCA) and distributed coordination function (DCF), or non-contention-based channel access.

On the contrary, in OFDMA-based communication, at least one STA may occupy and use a frequency resource for communication in a time resource. Specifically, when OFDMA-based communication is used, a plurality of STAs may respectively transmit uplink data through a plurality of assigned frequency bands in the time resource. That is, when non-legacy STAs access a channel based on OFDMA, each uplink data transmitted by at least one each non-legacy STA may be transmitted to an AP via multiplexing based on OFDMA.

To satisfy backward compatibility, a non-legacy STA and a legacy STA may operate in the same time resource. For example, uplink data transmitted by the non-legacy STA and uplink data transmitted by the legacy STA may be transmitted with a hyper-multiplex structure through a channel via multiplexing based on frequency division multiple access (FDMA).

Alternatively, to satisfy backward compatibility, a non-legacy STA and a legacy STA may operate in different time resources. Uplink data transmitted by the non-legacy STA and uplink data transmitted by the legacy STA may be transmitted with a hyper-multiplex structure through a channel via multiplexing based on time division multiple access (TDMA).

Hereinafter, operations of a non-legacy STA and a legacy STA to satisfy backward compatibility are illustrated in detail.

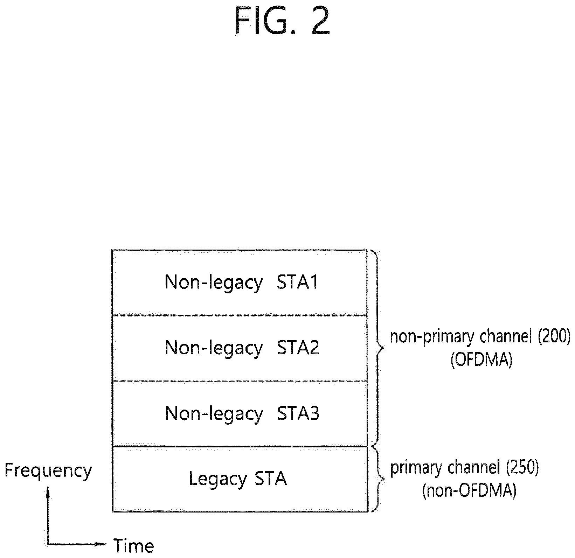

FIG. 2 is a conceptual view illustrating operations of non-legacy STAs and a legacy STA that communicate with an AP based on FDMA according to an embodiment of the present invention.

In FIG. 2, the legacy STA and the non-legacy STAs may be assigned different frequency resources based on FDMA.

The legacy STA may operate on a primary channel based on non-OFDMA, and the non-legacy STAs may operate on the primary channel based on OFDMA.

In the legacy WLAN system, the legacy STA may perform various operations, such as channel access, through the primary channel. Thus, in view of management or primary rules of the primary channel in the legacy WLAN system, the primary channel needs to be assigned to the legacy STA in the non-legacy WLAN system.

The legacy STA may recognize, as the primary channel, a channel used to receive a beacon frame in a channel scanning procedure. Alternatively, the legacy STA may receive information on the primary channel through an initial channel access frame (for example, a beacon frame, a (re)association response frame, and a probe response frame) transmitted by the AP. For example, a primary channel field of a high throughput (HT) operation element included in the initial channel access frame may include the information on the primary channel (for example, a channel number (channel index)). That is, the primary channel field may include the information on the primary channel used for a BSS (or set by the AP).

Referring to FIG. 2, in initial setting for a BSS to assign the primary channel to the legacy STA, the AP may set the primary channel as a channel to be used by the legacy STA.

Alternatively, when the legacy STA is difficult to operate on the primary channel, the AP may transmit, to the legacy STA, information on a channel to be used as an operating channel for the legacy STA through the primary channel field. The operating channel of the legacy STA other than the primary channel may be referred to as a legacy STA operating channel.

For example, when the primary channel is busy in an OBSS environment, the legacy STA may be difficult to operate on the assigned primary channel. In this case, the AP may transmit the primary channel field including information indicating a legacy STA operating channel. The legacy STA may recognize, as the primary channel, the legacy STA operating channel indicated by the primary channel field to operate. The legacy STA may recognize, as the primary channel, the legacy STA operating channel indicated by the primary channel field to operate as in existing operations.

Meanwhile, the AP may communicate with the legacy STA and another STA respectively through the primary channel and the legacy STA operating channel. For example, the AP may transmit a beacon frame including WLAN system management information and/or a reassociation response frame through not only the primary channel but also the legacy STA operating channel.

In the non-legacy WLAN system, the legacy STA operating channel may be set in view of overheads for transmission of a frame including system management information, such as a beacon frame, transmitted through a plurality of channels (primary channel and legacy STA operating channel).

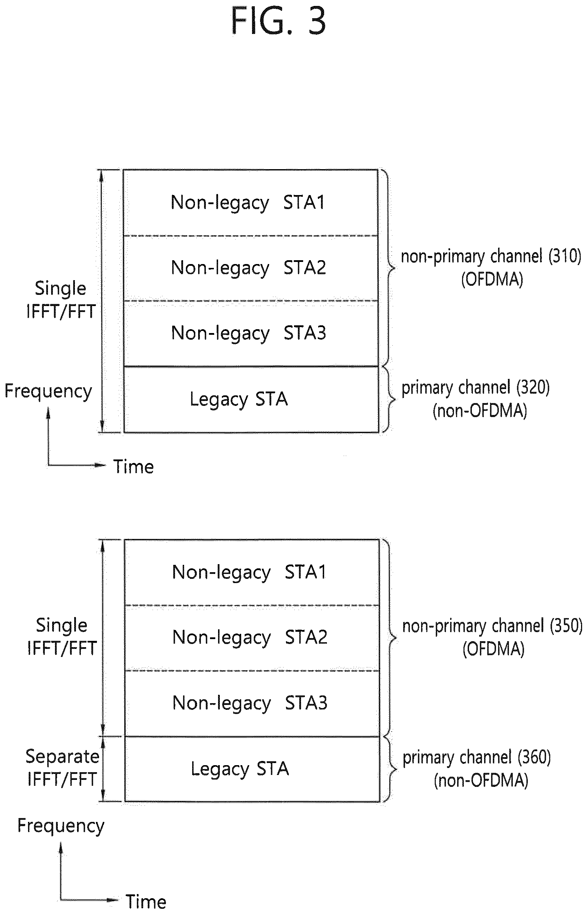

FIG. 3 is a conceptual view illustrating operations of non-legacy STAs and a legacy STA that communicate with an AP based on FDMA according to an embodiment of the present invention.

FIG. 3 illustrates FDMA-based operations of the non-legacy STAs and the legacy STA.

The legacy STA may perform a single fast Fourier transform (FFT, in downlink data reception)/single inverse FFT (IFFT, in uplink data transmission) in the same time resource as for the non-legacy STAs in time synchronization with the non-legacy STAs to communicate with an AP. Alternatively, the legacy STA may perform an FFT/IFFT independently of the non-legacy STAs to transmit or receive data.

Referring to an upper part of FIG. 3, when the legacy STA has a capability or front end to support a wider bandwidth, the legacy STA may perform a single FFT/IFFT for a wide bandwidth in the same time resource as for the non-legacy STAs to communicate with the AP. Additional signaling may be performed from the AP to the legacy STA for the single FFT/IFFT of the legacy STA with the non-legacy STAs.

When the legacy STA receives an indication of a wider bandwidth based on bandwidth (BW) information, the legacy STA may attempt to set the indicated wider bandwidth as an operating channel band to operate. In this case, an additional signal may be transmitted to the legacy STA in order to restrict the operating channel band of the legacy STA to a primary channel. Further, signaling for synchronization on the time axis between the legacy STA and the non-legacy STAs may be necessary. A channel bandwidth used by the legacy STA as the primary channel may be set to 40 MHz, 80 MHz, and the like, without being limited to 20 MHz.

Specifically, for example, it may be assumed that the legacy STA transmits uplink data based on non-OFDMA through a 20 MHz primary channel and at least one non-legacy STA transmits uplink data based on OFDMA through a 60 MHz non-primary channel including three 20 MHz non-primary channels. The legacy STA and the non-legacy STAs configure one OFDMA packet generated based on a single IFFT in the same time resource to transmit the uplink data through the primary channel and the non-primary channel.

The AP may transmit downlink data to the legacy STA through the 20 MHz primary channel and transmits downlink data to at least one non-legacy STA through the 60 MHz non-primary channel. The downlink data transmitted by the AP through the entire 80 MHz channel may be generated based on a single IFFT for the entire 80 MHz channel.

In order to receive the downlink data transmitted from the AP, the legacy STA may perform the FFT for the entire 80 MHz channel and selectively receive only the downlink data transmitted through the 20 MHz primary channel. At least one non-legacy STA may perform the FFT for the entire 80 MHz channel and selectively receive only the downlink data transmitted through at least one assigned non-primary channel among the three non-primary channels.

Referring to a lower part of FIG. 3, the legacy STA may also independently perform a separate FFT/IFFT on the assigned channel (for example, the primary channel) to transmit or receive data.

When a plurality of radio frequency (RF) units is provided for the AP (or when the AP provides a plurality of transmit chains), the legacy STA may independently perform the FFT/IFFT only on the assigned channel to transmit or receive data.

For example, the AP may receive first uplink data, generated by the legacy STA based on a first IFFT, through a first transmit chain and receive second uplink data, generated by the non-legacy STAs based on a second IFFT, through a second transmit chain. In this case, the legacy STA operates independently from the non-legacy STAs to transmit uplink data generated via a separate IFFT/FFT to the AP through the primary channel or the primary channel and a non-primary channel.

According to the embodiment of the present invention, transmission bands of the legacy STA and the non-legacy STAs may be contiguous or non-contiguous. That is, a 20 MHz primary channel assigned for the legacy STA and a 40 MHz non-primary channel assigned for the non-legacy STAs may be non-contiguous.

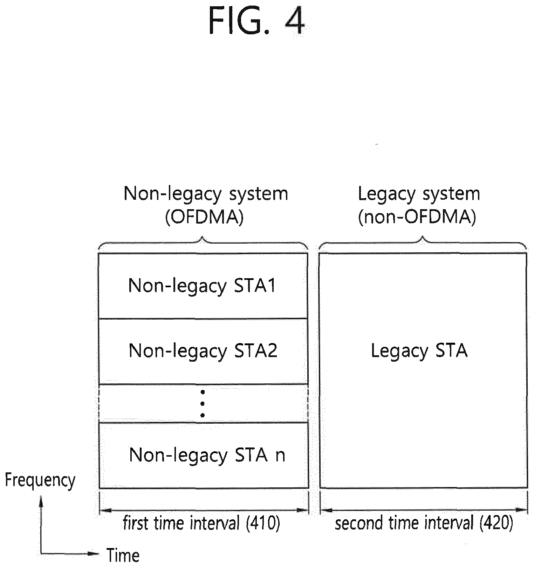

FIG. 4 is a conceptual view illustrating operations of non-legacy STAs and a legacy STA that communicate with an AP based on TDMA according to an embodiment of the present invention.

FIG. 4 illustrates the operations of the non-legacy STAs and the legacy STA that communicate with the AP based on TDMA.

Referring to FIG. 4, the non-legacy STAs operating based on OFDMA may communicate with the AP in a first time interval, and the legacy STA operating based on non-OFDMA may communicate with the AP in a second time interval. That is, only the non-legacy STAs may be supported in the first time interval, and only the legacy STA may be supported in the second time interval.

The size of a channel bandwidth used in the first time interval for the non-legacy STAs operating based on OFDMA may be different from the size of a channel bandwidth used in the second time interval for the legacy STA operating based on non-OFDMA.

In addition to the sizes of the channel bandwidths, at least one of FFT sizes, CP lengths, numerologies, PPDU structures, frame structures, and transmission protocols used to generate PPDUs transmitted in the first time interval and the second time interval may be different. These pieces of information may be transmitted through a frame or a header (or preamble) of a PPDU carrying the frame.

For example, the legacy STA may use conventional bandwidth indication information in order to acquire information on a channel band. For example, the legacy STA may acquire information on a channel band to use based on information on a SIG field included in a downlink PPDU and/or request to send (RTS)/clear to send (CTS) bandwidth (BW) negotiation information. Alternatively, the legacy STA may implicitly acquire information on a bandwidth based on detection of a PHY preamble of a PPDU. Information on an FFT size, a CP size, numerology, and a frame structure for the legacy STA may also explicitly be transmitted by an AP or implicitly be acquired by the STA.

The non-legacy STAs may acquire information on an FFT size, a CP size, numerology, a PPDU (or frame) structure, and a transmission protocol to be used in the assigned time interval using various methods. For example, the non-legacy STAs may acquire information on a channel bandwidth (for example, bandwidth size or bandwidth index) based on a sequence included in a PHY preamble of a downlink PPDU. Alternatively, the non-legacy STAs may acquire information on a channel bandwidth based on blind detection.

The information on the channel bandwidth may be associated with other information (for example, a FFT size, numerology, a CP size, a PPDU (or frame) structure, and a transmission protocol.). For example, the size of a specific channel bandwidth may be associated with at least one piece of information among a specific FFT size, numerology, a CP length, a frame structure, and a transmission protocol. Thus, when the size of a channel bandwidth is determined, at least one piece of information of a FFT size, numerology, a CP length, a frame structure, and a transmission protocol may be dependently determined. A mapping relationship between pieces of information may be defined based on a table, and the table defining the mapping relationship between the pieces of information may be used by the non-legacy STAs.

The non-legacy WLAN system may support a WLAN in various environments including an outdoor condition. Further, the non-legacy WLAN system needs to improve spectral efficiency, average throughput, and the like as compared with the existing legacy WLAN system. The non-legacy WLAN system may operate based on a structure of a plurality of PPDUs (or frames) or numerology to satisfy these requirements.

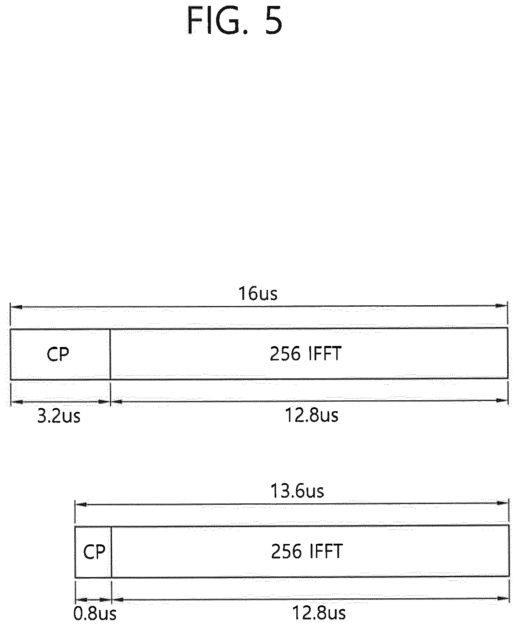

FIG. 5 is a conceptual view illustrating a PPDU structure used for the non-legacy WLAN system according to an embodiment of the present invention.

In the following embodiment of the present invention, a PPDU structure transmitted generally in a 20 MHz channel bandwidth is described. A PPDU structure transmitted in a wider bandwidth (for example, 40 MHz or 80 MHz) than the 20 MHz channel bandwidth may be a linearly scaled structure of the PPDU structure used in the 20 MHz channel bandwidth.

A legacy PPDU structure used in the legacy WLAN system may be generated based on a 64 FFT and may have a cyclic prefix (CP) portion that is 1/4 of the PPDU structure. In this case, an effective symbol interval (or FFT interval) may have a length of 3.2 us, the CP may have a length of 0.8 us, and symbol duration may be the sum of the lengths of the effective symbol interval and the CP that is 4 us (3.2 us + 0.8 us).

A non-legacy PPDU structure used in the non-legacy WLAN system may be generated based on an IFFT with an increased size to use a WLAN in an outdoor environment and may have a CP with an extended length. An increase in the length of the CP in the non-legacy PPDU structure may increase robustness against a larger delay spread in the outdoor environment.

When only the length of a CP of OFDM symbols forming a PDDU is increased without an increase in the size of an IFFT for generating the PPDU, spectral efficiency may be reduced. Thus, a non-legacy PPDU may be generated based on an IFFT with an increased size and a CP with an extended length as compared with a legacy PPDU. Although the IFFT size and the CP length are increased, the size of a channel bandwidth assigned to the system may not change. An increase in the size of a channel bandwidth may be an issue related to a scalable bandwidth. Considering an outdoor delay spread, when the CP length is increased by two to four times, serious deterioration in performance of WLAN communication in the outdoor environment may be prevented.

Referring to an upper part of FIG. 5, when an IFFT size is increased by four times from 64 to 256, a subcarrier space may be decreased to 1/4. When the subcarrier space may be decreased to 1/4, the length of an effective symbol interval may be 12.8 us, which is four times 3.2 us. When a CP portion is 1/4, the length of the CP may be 3.2 us, which is 1/4 of 12.8 us. Symbol duration may be 16 us (12.8 us + 3.2 us), which is the sum of the effective symbol interval and the CP length.

Another non-legacy PPDU structure available for the non-legacy WLAN system may be generated based on an IFFT with an increased size, in which the length of a CP in the non-legacy PPDU structure may be equal to the length of the CP in the legacy PPDU structure.

Referring to a lower part of FIG. 5, when the IFFT size is increased but the CP length is not extended, spectral efficiency may increase. An IFFT with a quadruple size is used but a reduced number of resources are assigned to the CP, thereby increasing resource utilization efficiency. For example, it may be assumed that the IFFT size is increased from 64 to 256 and the CP portion is 1/16. When the subcarrier space may be decreased to 1/4, the length of the effective symbol interval may be 12.8 us, which is four times 3.2 us. When the CP portion is 1/16, the length of the CP may be 0.8 us. Symbol duration may be the sum of the effective symbol interval and the CP length 13.6 us (12.8 us + 0.8 us).

Comparing the non-legacy PPDU with the legacy PPDU, time resources are increased by 3.4 times, while frequency resources are increased by four times. That is, the length of the effective symbol interval included in the symbol duration in the non-legacy PPDU structure may relatively be increased and spectral efficiency may be increased by about 17%.

The number of actually available subcarrier tones with an increase in a bandwidth may be greater than the number of tones that may linearly increase with an increase in the size of a bandwidth. Thus, actual spectral efficiency may be increased by a greater value than 17%.

In the non-legacy WLAN system, the foregoing non-legacy PPDU structure may adaptively be used depending on a situation. For example, in the non-legacy WLAN system, the foregoing non-legacy PPDU structure may adaptively be used depending on whether the WLAN is used outdoors or indoors and whether the WLAN environment is dense.

For example, in the non-legacy WLAN system, a 256 IFFT may be used to generate a PPDU, and either 1/4 or 1/16 CP portion may selectively be used. In the non-legacy WLAN system, it is needed to dynamically or semi-dynamically signal information on a used non-legacy PPDU structure.

Various methods may be used to indicate a specific non-legacy PPDU structure among a plurality of non-legacy PPDU structures. For example, information on a CP portion is one essential piece of information of numerology information for detection and/or decoding of a PPDU. Thus, the information on the CP portion may be transmitted through a preamble portion (or PPDU header). The PPDU header may include a PHY header and a PHY preamble.

For example, an STA may perform blind detection of a preamble sequence included in a PPDU header and may implicitly acquire information on numerology used to generate a PPDU based on blind detection. Alternatively, information on a CP portion may explicitly be transmitted to an STA based on a preamble sequence. Alternatively, a SIG field of a PPDU header may be used to identify information on a CP portion or to carry information on a CP portion of a next PPDU. Not only information on a CP potion but also information on numerology/PPDU (or frame) structure for detection and/or decoding of a frame may be transmitted through a PPDU header. Hereinafter, a PPDU structure may be used to refer to a structure of a frame carried by a PPDU inclusively.

Information on a PPDU structure used (or supported) in a BSS may also be transmitted to an STA through a management frame, such as a beacon frame used for initial access of the STA, a probe response frame, and an association response frame.

After association of the STA, information on numerology/PPDU structure for detection and/or decoding of a frame may dynamically be transmitted through each PPDU header (or PHY preamble). Alternatively, the information on the numerology/PPDU structure for detection and/or decoding of the frame may semi-dynamically be transmitted through a periodically transmitted frame, such as a beacon frame. Based on the foregoing signaling, the information on the PPDU structure used in the BSS may be acquired and detection and/or decoding of a PPDU may be performed based on the information on the PPDU structure.

In an OBSS environment, each BSS may acquire information on a PPDU structure supported by another BSS to perform communication between the BSSs. For example, a beacon frame transmitted by an AP forming a specific BSS may include information on a PPDU structure used in a neighbor BSS. An STA associated with a specific AP may acquire information on a PPDU structure used by a neighbor AP through a beacon frame.

Alternatively, information on PPDU structures supported by BSSs may be transmitted or received based on separate communication between the BSSs. In a BSS supporting the legacy WLAN system, information on a PPDU structure supported by the BSS may not be signaled. In this case, an STA included in the BSS supporting the legacy WLAN system may determine through physical preamble detection whether it is possible to support a PPDU structure used by another BSS.

Hereinafter, an embodiment of the present invention discloses OFDMA-based communication to improve the efficiency of the non-legacy WLAN. Although the following description will be made based on a 20 MHz channel band, an OFDMA frame structure according to the embodiment of the present invention may be extended for application to a wider channel band than the 20 MHz channel band.

In the non-legacy WLAN system, the granularity of OFDMA may be set by the channel band used in the existing legacy WLAN system in order to maintain maximum commonality with the legacy WLAN system. That is, the non-legacy WLAN system may assign at least one each non-legacy STA a channel bandwidth determined based on the 20 MHz channel bandwidth, and the at least one each non-legacy STA may communicate with an AP through the channel bandwidth generated based on the 20 MHz channel bandwidth. In this case, the size of the minimum channel band is 20 MHz, and the STA may not operate on a channel bandwidth smaller than the 20 MHz channel bandwidth. For example, when the size of an available channel band is 80 MHz, four 20 MHz channel bands included in the 80 MHz channel band may be assigned to up to four STAs, respectively, to perform OFDMA-based communication.

When the size of the minimum channel band for OFDMA-based communication is 20 MHz, it may be difficult to obtain gains from OFDMA communication. When the size of the minimum channel band for OFDMA-based communication is 20 MHz and an available channel band is 40 MHz, simultaneous communications with only up to two STAs may be performed. 80 MHz and 160 MHz channel bands are difficult to secure in view of the use of frequency resources by country and an increasing number of APs (BSSs). Thus, when the size of the minimum channel band for OFDMA-based communication is 20 MHz, it may be difficult to achieve OFDMA-based communications with a plurality of STAs.

When the number of STAs to perform simultaneous communications based on OFDMA increases, a multi-user diversity gain and scheduling flexibility may increase. Thus, when a greater number of STAs are allocated to a frequency resource, OFDMA-based communications may be effective.

Therefore, the minimum channel band to be assigned to one STA for OFDMA-based communication may be set smaller than 20 MHz in the non-legacy WLAN system.

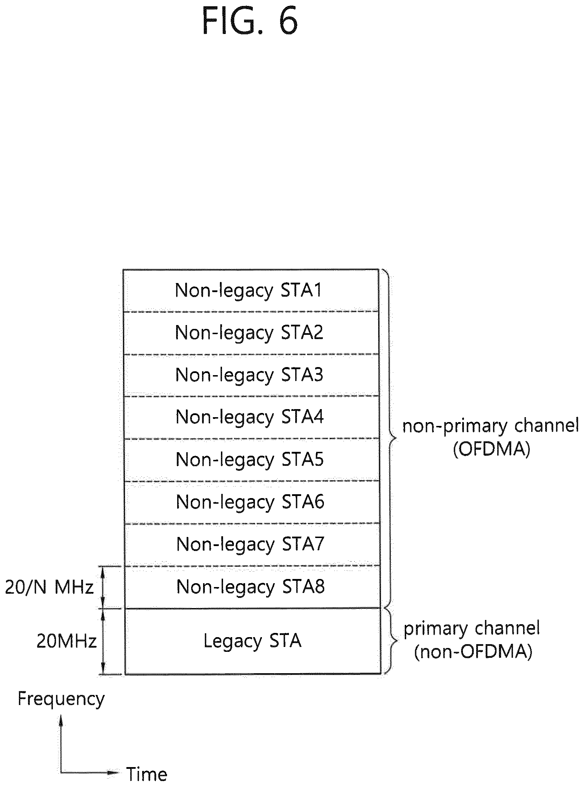

FIG. 6 is a conceptual view illustrating OFDMA-based communication according to an embodiment of the present invention.

FIG. 6 illustrates the minimum channel bandwidth for OFDMA-based communication.

Referring to FIG. 6, for example, the size of the minimum channel band (minimum granularity) assignable to one STA may be 20/N MHz. That is, 20/N MHz may be used for OFDMA-based communication with one STA. N is a value for determining a minimum channel band size, which may be a fixed value or be a variable value selected in the non-legacy WLAN system. N may be expressed as a minimum channel band determining parameter.

When an AP (or STA) supports a plurality of RF units, a different value of N may be defined and used for a transmit chain based on each of the RF units. N may implicitly or explicitly be transmitted through a PPDU header in a similar manner to a method for transmitting information on a CP portion.

When the AP (or STA) supports a single RF unit, it may be difficult to use different values of N on a single transmit chain. Thus, communication may be performed based on different values of N on different time resources according to TDMA. Likewise, N may implicitly or explicitly be transmitted through a PPDU header in a similar manner to a method for transmitting information on a CP portion.

When a channel access operation through the existing 20 MHz primary channel is maintained (the existing primary rules are maintained), a portion for basic detection of an STA (for example, a preamble and a common signal (SIG) field) in a PPDU may be transmitted through the 20 MHz minimum channel band.

A separate SIG field including information on each of the other STAs and a Data field may be transmitted based on the minimum channel band determined based on N smaller than 20 MHz.

A frame transmitted to a legacy STA, such as a beacon frame, an RTS frame, and a CTS frame, may be transmitted on the primary channel through the 20 MHz channel band in view of backward compatibility with the legacy STA. A frame that the legacy STA does not need to receive may be transmitted through a channel band determined based on various values of N.

Alternatively, the non-legacy WLAN system may set N to 1 to operate the primary channel and set N>1 to operate a non-primary channel.

N may be determined dependently on the size of the entire channel band (system band). N is a value based on a 20 MHz channel band. N may be determined to maintain the number of STAs supported in each system bandwidth but to increase the number of supportable resources per STA.

For example, N may be 80 MHz/size of system band or N may be 160 MHz/ size of system band. When the size of the system band is 20MHz, N may be 4 or 8. That is, the minimum channel band may be 5 MHz or 2.5 MH. In the 40 MHz system band, up to four or eight STAs may be allowed to operate. Likewise, when the size of the system band is 40 MHz, N may be 2 or 4 and the minimum channel band may be 10 MHz or 5 MHz. In the 40 MHz system band, up to four or eight STAs may be allowed to operate. When the size of the system band is 80 MHz, N may be N or 2 and the minimum channel band may be 20 MHz or 10 MHz. In the 80 MHz system band, up to four or eight STAs may be allowed to operate. When the size of the system band is 160MHz, N may be 1 and the minimum channel band may be 20 MHz. In the 160 MHz system band up to eight STAs may be allowed to operate.

The non-legacy WLAN system may operate based on various combinations of the foregoing methods.

For example, the non-legacy WLAN system may operate in the 20 MHz channel band based on a PPDU generated based on a 256 IFFT and a CP portion of 1/4 or 1/16 and may have the minimum channel band for OFDMA-based communication that is 5 MHz (N=4). In this case, the non-legacy WLAN system may operate based on the IFFT with a quadruple size and the minimum channel band reduced to 1/4 as compared with the existing legacy WLAN system. The non-legacy WLAN system may have similarity (similarity in the number of subcarrier tones corresponding to one symbol or operational similarity in information quantity) to the existing legacy WLAN system from an STA viewpoint.

That is, when the number of non-legacy STAs operating in 20 MHz based on OFDMA and the number by which the FFT size is multiplied are increased to be equal, non-legacy STAs may operate similarly to operations in the existing legacy WLAN system.

Alternatively, the non-legacy WLAN system may operate in the 20 MHz channel band based on a PPDU generated based on a 1024 IFFT and a CP portion of 1/16. When this PPDU is used, spectral efficiency may be improved due to an increase in IFFT size and robustness in the outdoor environment may be satisfied.

Alternatively, the IFFT size may be determined independently of the size of the system bandwidth.

For example, when the size of the system band is 20 MHz, a 512 IFFT may be used and the size of the minimum channel bandwidth may be 2.5 MHz (N=8). When the size of the system band is 40 MHz, a 512 IFFT may be used and the size of the minimum channel bandwidth may be 5 MHz (N=4). When the size of the system band is 80 MHz, a 512 IFFT may be used and the size of the minimum channel bandwidth may be 10 MHz (N=2). When the size of the system band is 160 MHz, a 512 IFFT may be used and the size of the minimum channel bandwidth may be 20 MHz (N=1).

Alternatively, when the size of the system band is 20 MHz, a 256 IFFT may be used and the size of the minimum channel bandwidth may be 5 MHz (N=4). When the size of the system band is 40 MHz, a 256 I FFT may be used and the size of the minimum channel bandwidth may be 10 MHz (N=2). When the size of the system band is 80 MHz, a 256 IFFT may be used and the size of the minimum channel bandwidth may be 20 MHz (N=1). When the size of the system band is 160 MHz, a 256 IFFT may be used and the size of the minimum channel bandwidth may be 20 MHz (N=1)

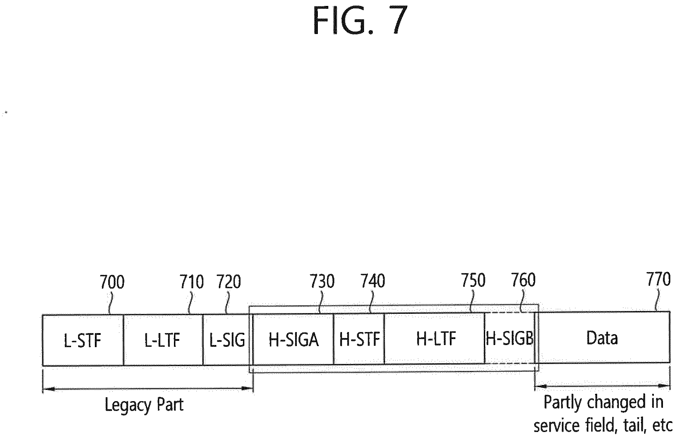

FIG. 7 is a conceptual view illustrating a structure of a non-legacy PPDU supported by the non-legacy WLAN system according to an embodiment of the present invention.

Referring to FIG. 7, the non-legacy PPDU may include a legacy-short training field (L-STF) 700, a legacy-long training field (L-LTF) 710, a legacy-signal (L-SIG) 730, a high efficiency-signal A (H-SIG A) 730, a high efficiency-short training field (H-STF) 740, a high efficiency-long training field (H-LTF) 750, a high efficiency-signal-B (H-SIG B) 760, and a Data field 770.

The L-STF 700 may include a short training orthogonal frequency division multiplexing (OFDM) symbol. The L-STF 700 may be used for frame detection, automatic gain control (AGC), diversity detection, and coarse frequency/time synchronization.

The L-LTF 710 may include a long training OFDM symbol. The L-LTF 710 may be used for fine frequency/time synchronization and channel estimation.

The L-SIG 720 may be used to transmit control information. The L-SIG 720 may include information on data rate and data length.

A portion including the L-STF 700, the L-LTF 710, and the L-SIG 720 may be represented by a legacy part.

The H-SIG A 730 may include information on a channel band assigned to each STA, information on the number of spatial streams assigned to each STA in multiple-input and multiple-output (MIMO) transmission, and the like. The H-SIG A 730 may be scalable per 20 MHz.

The H-STF 740 may be used to improve automatic gain control estimation in an MIMO environment or OFDMA environment.

The H-LTF 750 may be used to estimate a channel in the MIMO environment or OFDMA environment. Further, the H-LTF 750 may be used for carrier frequency offset (CFO) measurement and CFO compensation. In addition, the H-LTF 750 may be used to decode the H-SIG B 760 and the Data field 770.

The H-SIG B 760 may include information for decoding a physical layer service data unit (PSDU or Data field) for each STA. For example, the H-SIG B 760 may include information on the length of a PSDU and a modulation and coding scheme (MCS) used for the PSDU, tail bits, and the like.

An IFFT applied to the H-STF 740 and fields following the H-STF 740 may have a different size from an IFFT applied to fields preceding the H-STF 740. For example, the IFFT applied to the H-STF 740 and the fields following the H-STF 740 may have a size four times larger than that applied to the fields preceding the H-STF 740. A CP of the H-STF 740 may have a larger size than CPs of other fields. During CP duration, an STA may decode a downlink PPDU by changing the FFT size.

The fields in the PPDU format illustrated in FIG. 7 may be configured in a different order.

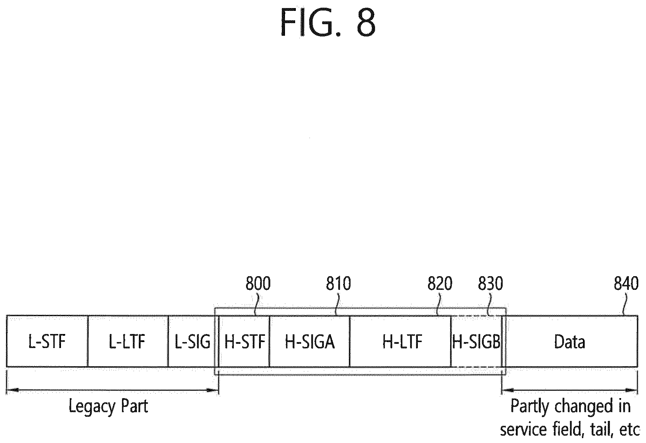

FIG. 8 is a conceptual view illustrating a structure of a non-legacy PPDU supported by the non-legacy WLAN system according to an embodiment of the present invention.

Referring to FIG. 8, a legacy part including an L-STF, an L-LTF, and an L-SIG is the same as above. An H-STF 800, an H-SIG A 810, an H-LTF 820, an H-SIG B 830, and a Data field 840 may sequentially be included in a non-legacy PPDU.

When the H-STF 800 precedes the H-SIG A 810, information on a channel bandwidth may not be identified. Thus, a fixed channel bandwidth may be used or blind detection for a channel bandwidth may be performed. Information on a channel bandwidth may be transmitted based on a sequence forming the H-STF 800. Further, the H-STF 800 may include BSS color information. The BSS color information is information to indicate whether a transmitted packet is transmitted from a BSS including an STA.

The H-SIG A 810 may include information on the number of spatial streams assigned to each STA in MIMO transmission. When the H-STF 800 includes information on a channel bandwidth, the H-SIG A 810 may not include the information on the channel bandwidth.

The H-LTF 820 and the H-SIG B 830 may be used the same as those in FIG. 7.

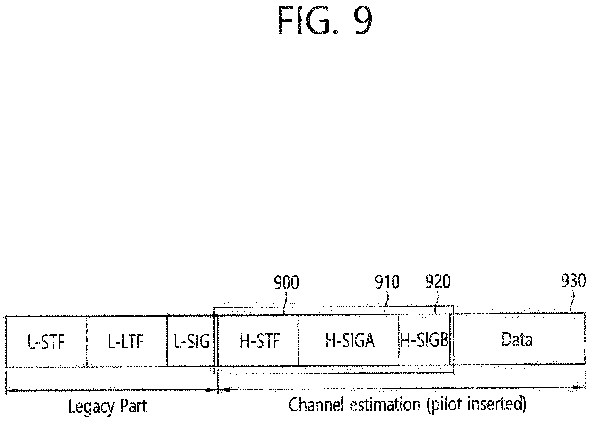

FIG. 9 is a conceptual view illustrating a structure of a non-legacy PPDU supported by the non-legacy WLAN system according to an embodiment of the present invention.

In FIG. 9, a legacy part including an L-STF, an L-LTF, and an L-SIG is the same as above. An H-STF 900, an H-SIG A 910, an H-SIG B 920, and a Data field 930 may sequentially be included in a non-legacy PPDU. The non-legacy PPDU may include no H-LTF.

Referring to FIG. 9, the H-STF 900 functions the same as the H-STF illustrated in FIG. 8 and may further function as the H-LTF. That is, the H-STF 900 may be used for CFO measurement and CFO compensation. For example, the equal frequency position of STF tones across more than 2 symbols (8us) may be needed for CFO measurement and CFO compensation based on the H-STF 900 or phase shift.

The H-SIG A 910 functions the same as the H-SIG A illustrated in FIG. 8 and may include a pilot for channel estimation to be substituted for the H-LTF. The number of symbols for the H-SIG A 910 may be greater than 2.

The H-SIG B 920 may be used to function as illustrated in FIG. 7 or may not included.

The Data field 930 may include a pilot to be substituted for the H-LTF.

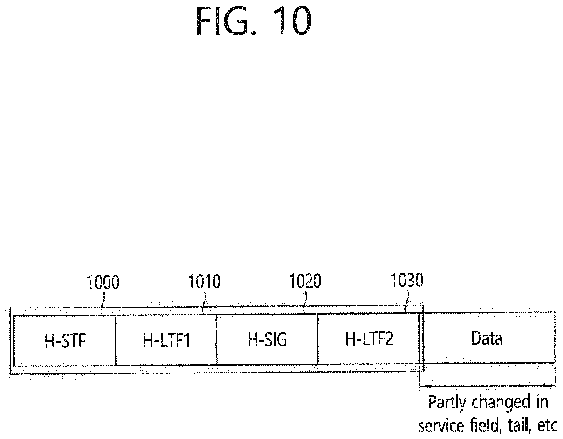

FIG. 10 is a conceptual view illustrating a structure of a non-legacy PPDU supported by the non-legacy WLAN system according to an embodiment of the present invention.

Referring to FIG. 10, the non-legacy PPDU structure may include an H-STF, an H-LTF1, an H-SIG, an H-LTF2, and a Data field without a legacy part.

The H-STF 1000 may be used to improve automatic gain control estimation in an MIMO environment or OFDMA environment. Blind detection for a channel bandwidth may be performed to receive the H-STF 1000 or the H-STF 1000 may be transmitted through a fixed channel bandwidth. Information on a channel bandwidth (for example, a channel bandwidth index) and/or BSS color information may be transmitted through the H-STF 1000. When the information on the channel bandwidth and/or BSS color information are transmitted based on the H-STF 1000, the H-SIG 1020 may not include the information on the channel bandwidth and/or BSS color information.

The H-LTF1 1010 may be used to decode the H-SIG 1020. When the information on the channel bandwidth is acquired based on the H-STF 1000, blind detection for a channel bandwidth for transmitting the H-LTF1 1010 may not be performed. When the information on the channel bandwidth is not acquired based on the H-STF 1000, blind detection for a channel bandwidth may be performed to receive the H-LTF1 1010 or the H-LTF1 1010 may be transmitted through a fixed channel bandwidth.

The H-SIG 1020 may include the information on the channel bandwidth and information on the number of spatial streams assigned to each STA in MIMO transmission.

The H-LTF2 1030 may be used to decode the Data field.

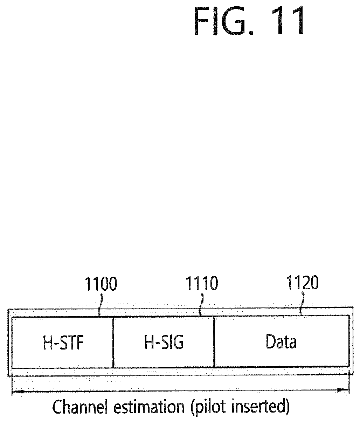

FIG. 11 is a conceptual view illustrating a structure of a non-legacy PPDU supported by the non-legacy WLAN system according to an embodiment of the present invention.

Referring to FIG. 11, the non-legacy PPDU structure may include an H-STF 1100, an H-SIG 1110, and a Data field 1120 without a legacy part. The non-legacy PPDU structure may include no H-LTF.

The H-STF 1100, the H-SIG 1110, and the Data field 1120 may include a pilot.

In a description based on the H-SIG 1110, when an IFFT with a quadruple size is used in the non-legacy WLAN system as compared with in the legacy WLAN system, 6.35 times pilot design margin may occur. That is, one pilot may be used every 6.35 tones (subcarrier tones). In this case, about 8.19 pilots may be transmitted on one OFDM symbol. Since the H-SIG 1110 is transmitted on two OFDM symbols, 16.38 pilots may be transmitted on the OFDM symbols for the H-SIG.

In a description based on the H-SIG 1110, when an IFFT with a double size is used in the non-legacy WLAN system as compared with in the legacy WLAN system, 3.175 times pilot design margin may occur. That is, one pilot may be used every 3.175 tones. In this case, about 16.38 pilots may be transmitted on one OFDM symbol. Since the H-SIG 1110 is transmitted on two OFDM symbols, 32.76 pilots may be transmitted on the OFDM symbols for the H-SIG.

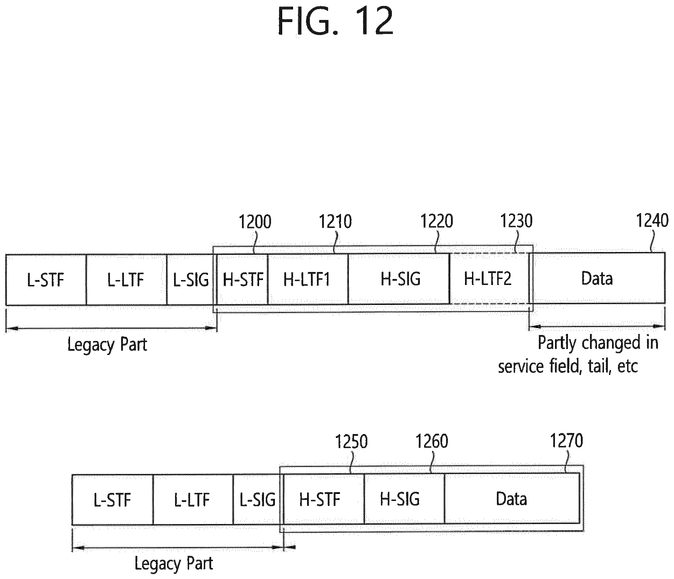

FIG. 12 is a conceptual view illustrating a structure of a non-legacy PPDU supported by the non-legacy WLAN system according to an embodiment of the present invention.

Referring to an upper part of FIG. 12, the non-legacy PPDU structure may include a legacy part, an H-STF 1200, an H-LTF1 1210, an H-SIG 1220, an H-LTF2 1230, and a Data field 1240.

The H-LTF1 1210 may be used to decode the H-SIG 1220, and the H-LTF2 1230 may be used to decode the Data field 1240.

The non-legacy PPDU structure may include no H-LTF2. If no H-LTF2 is included, the Data field 1240 may include a pilot and may be decoded based on the pilot.

Referring to a lower part of FIG. 12, the non-legacy PPDU structure may include a legacy part, an H-STF 1250, an H-SIG 1260, and a Data field 1270.

The H-SIG 1260 and the Data field 1270 may include a pilot and may be decoded based on the pilot.

When the non-legacy PPDU structure may include no H-LTF, the H-STF may be transmitted on a greater number of OFDM symbols than two symbols for CFO measurement and CFO compensation.

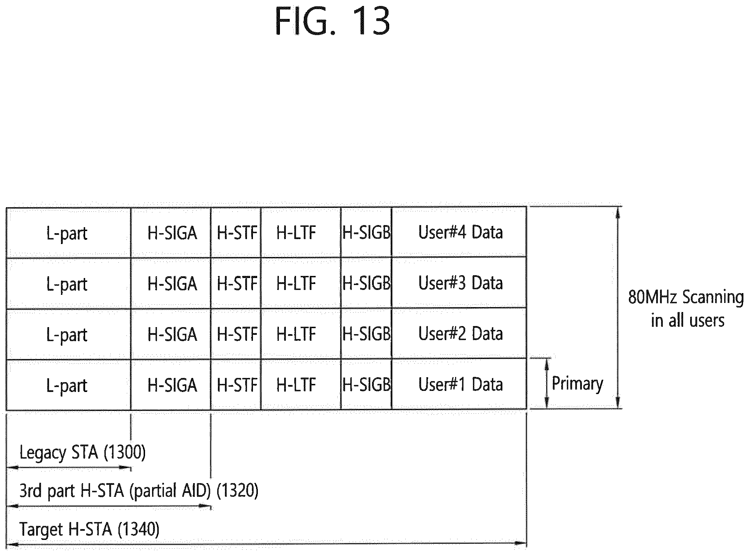

FIG. 13 is a conceptual view illustrating a downlink PPDU transmitted based on OFDMA according to an embodiment of the present invention.

FIG. 13 illustrates a structure of a non-legacy PPDU transmitted in an 80 MHz bandwidth including a primary channel and a non-primary channel.

Referring to FIG. 12, a legacy STA 1300 may decode a legacy part and may not decode an H-SIG A and fields following the H-SIG A. The legacy STA 1300 may determine based on a constellation of symbols transmitted on OFDM symbols that the H-SIG A and the fields following the H-SIG A are not for the legacy STA 1300 and may not decode the H-SIG A and the fields following the H-SIG A. Alternatively, the legacy STA 1300 may determine that an H-SIG A based on different numerology from that for a legacy PPDU is generated and may suspend decoding the H-SIG A and the fields following the H-SIG A.

A non-legacy STA 1320 may decode the H-SIG A. The non-legacy STA 1320 may determine based on the H-SIG A whether the non-legacy STA 1320 is a target STA of the PPDU (STA to receive the PPDU). When the non-legacy STA 1320 is not the target STA of the PPDU, the non-legacy STA 1320 may suspend decoding the fields following the H-SIG A. The H-SIG A may include information indicating a non-legacy STA to receive the PPDU and channel assignment information on each non-legacy STA.

When a non-legacy STA 1340 is the target STA of the PPDU, the non-legacy STA 1340 may decode the fields following the H-SIG A.

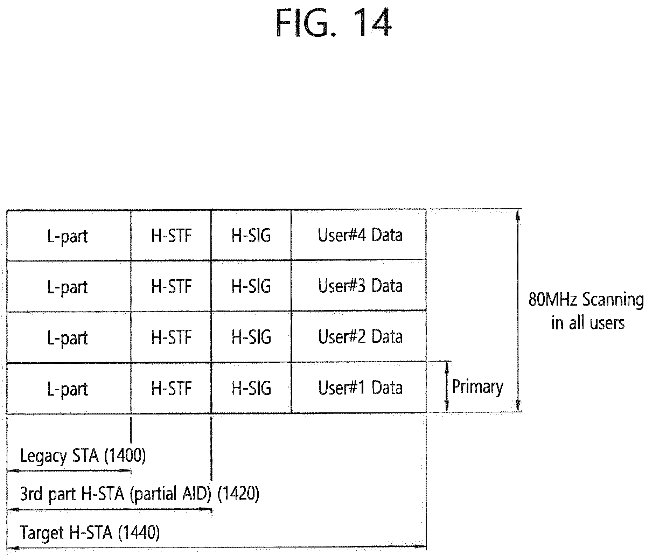

FIG. 14 is a conceptual view illustrating a downlink PPDU transmitted based on OFDMA according to an embodiment of the present invention.

FIG. 14 illustrates a structure of a non-legacy PPDU transmitted in an 80 MHz bandwidth including a primary channel and a non-primary channel.

Referring to FIG. 13, a legacy STA 1400 may decode a legacy part and may not decode an H-STF and fields following the H-STF.

A non-legacy STA 1420 may decode an H-SIG. The non-legacy STA 1420 may determine based on the H-SIG whether the non-legacy STA 1420 is a target STA of the PPDU (STA to receive the PPDU). When the non-legacy STA 1420 is not the target STA of the PPDU, the non-legacy STA 1420 may suspend decoding fields following the H-SIG. When a non-legacy STA 1440 is the target STA of the PPDU, the non-legacy STA 1440 may decode the fields following the H-SIG.

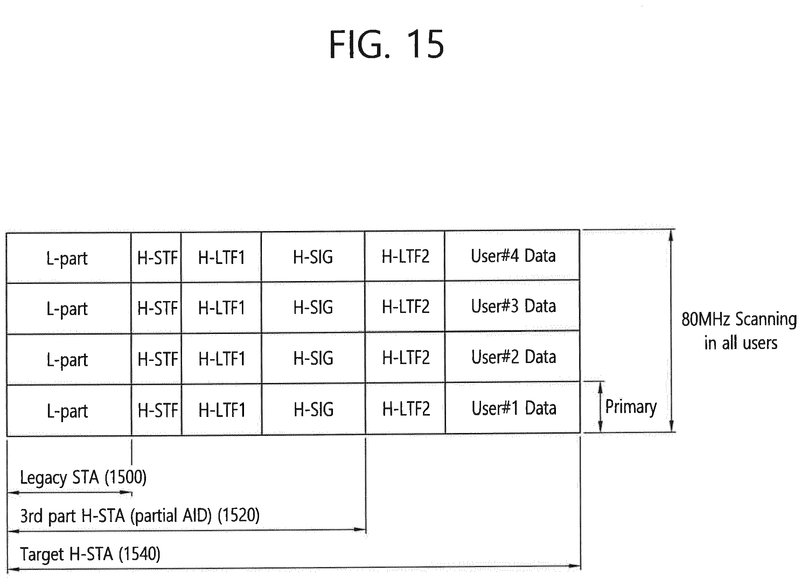

FIG. 15 is a conceptual view illustrating a downlink PPDU transmitted based on OFDMA according to an embodiment of the present invention.

FIG. 15 illustrates a structure of a non-legacy PPDU transmitted in an 80 MHz bandwidth including a primary channel and a non-primary channel.

Referring to FIG. 15, a legacy STA 1500 may decode a legacy part and may not decode an H-STF and fields following the H-STF.

A non-legacy STA 1520 may decode an H-SIG. The non-legacy STA 1520 may determine based on the H-SIG whether the non-legacy STA 1520 is a target STA of the PPDU (STA to receive the PPDU). When the non-legacy STA 1520 is not the target STA of the PPDU, the non-legacy STA 1520 may suspend decoding fields following the H-SIG.

When a non-legacy STA 1540 is the target STA of the PPDU, the non-legacy STA 1540 may decode the fields following the H-SIG.

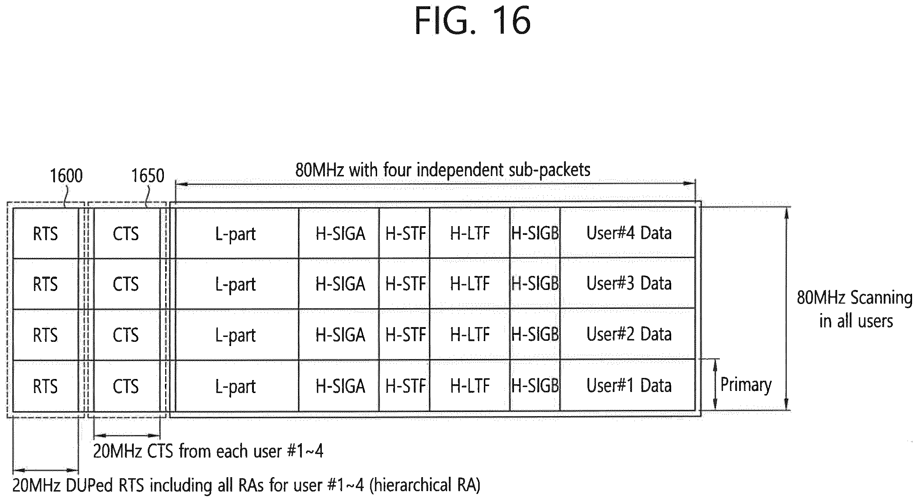

FIG. 16 is a conceptual view illustrating a downlink PPDU transmitted based on OFDMA according to an embodiment of the present invention.

FIG. 16 illustrates transmission of an RTS frame 1600 and a CTS frame 1650 and a structure of a non-legacy PPDU transmitted in an 80 MHz bandwidth including a primary channel and a non-primary channel.

Referring to FIG. 16, the RTS frame 1600 may be transmitted to STA 1 to STA 4 in a duplicated manner. A receiver address (RA) field of the RTS frame 1600 may include information indicating STA 1 to STA 4. For example, the RA field of the RTS frame 1600 may include partial association identifier (AID) information on each of STA 1 to STA 4.

STA 1 to STA 4 may transmit the CTS frame 1650 in response to the RTS frame 1600.

The non-legacy PPDU structure shown in FIG. 16 is an illustrative structure, and various non-legacy PPDU structures illustrated above may be used.

STA 1 to STA 4 may acquire information on an assigned channel bandwidth based on an H-SIG A and may decode data transmitted through each assigned channel bandwidth.

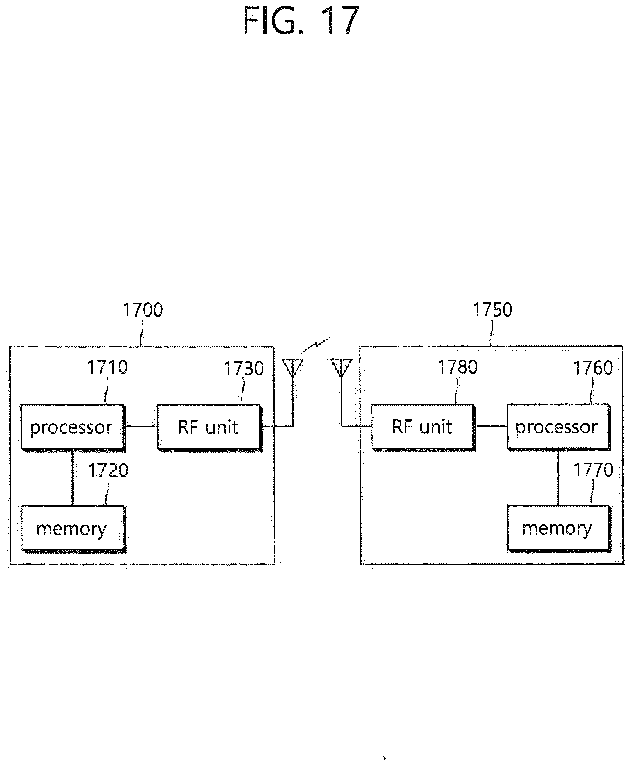

FIG. 17 is a block diagram illustrating a wireless device according to an embodiment of the present invention.

Referring to FIG. 17, the wireless device 1300 may be an STA to implement the foregoing embodiments, which may be an AP 1700 or a non-AP STA (or STA) 1750.

The AP 1700 includes a processor 1710, a memory 1720, and a radio frequency (RF) unit 1730.

The RF unit 1730 may be connected to the processor 1710 to transmit/receive a radio signal.

The processor 1710 may implement functions, processes and/or methods suggested in the present invention. For example, the processor 1710 may be configured to perform operations of a wireless device according to the foregoing embodiments of the present invention. The processor may perform the operations of the wireless devices illustrated in the embodiments of FIGS. 2 to 16.

For example, the processor 1710 may be configured to transmit a first PPDU to a first STA through a first frequency resource in a time resource and to transmit a second PPDU to a second STA through a second frequency resource in a time resource overlapping with the time resource. The first frequency resource may be assigned to the first STA based on contention-based or non-contention-based channel access of the first STA, and the second frequency resource may be assigned to the second STA based on OFDMA.

The STA 1750 includes a processor 1760, a memory 1770, and an RF unit 1380.

The RF unit 1780 may be connected to the processor 1760 to transmit/receive a radio signal.

The processor 1760 may implement functions, processes and/or methods suggested in the present invention. For example, the processor 1720 may be configured to perform operations of a wireless device according to the foregoing embodiments of the present invention. The processor may perform the operations of the wireless devices illustrated in the embodiments of FIGS. 2 to 16.

For example, the processor 1760 may decode a PPDU received on a frequency resource assigned to the STA. When the STA is a legacy STA, a legacy PPDU transmitted through a primary channel may be decoded. When the STA is a non-legacy STA, a non-legacy PPDU transmitted through a non-primary channel may be decoded. Further, the processor 1760 may acquire information on a PPDU format and numerology based on information included in a PPDU header.

The processors 1710 and 1760 may include an application-specific integrated circuit (ASIC), other chipsets, a logic circuit, a data processor and/or a converter to convert a baseband signal and a radio signal from one to the other. The memories 1720 and 1770 may include a read-only memory (ROM), a random access memory (RAM), a flash memory, a memory card, a storage medium and/or other storage devices. The RF units 1730 and 1780 may include at least one antenna to transmit and/or receive a radio signal.

When the embodiments are implemented with software, the foregoing techniques may be implemented by a module (process, function, or the like) for performing the foregoing functions. The module may be stored in the memories 1720 and 1770 and be executed by the processors 1710 and 1760. The memories 1720 and 1770 may be disposed inside or outside the processors 1710 and 1760 or be connected to the processors 1710 and 1760 via various well-known means.

## Claims

1. A method of transmitting a downlink multi-user, DL MU, Physical layer convergence procedure, PLCP, Protocol Data Unit, PPDU, including a PPDU header, first non-legacy fields, and second non-legacy fields in a wireless local area network, WLAN, the method comprising:
transmitting, by an access point, AP, the PPDU header including a signal, SIG, field,
wherein the SIG field includes a minimum channel band determining parameter for determining a bandwidth for a plurality of subchannels corresponding to a non-primary channel, wherein the non-primary channel is a secondary 20MHz channel, and wherein the bandwidth corresponds to 20MHz/N when the minimum channel band determining parameter is set to N;
transmitting, by the AP, the first non-legacy fields to a first station, STA, through a first subchannel among the plurality of subchannels in a first time resource,
wherein the first non-legacy fields include first identification information related to the first STA and first channel allocation information related to the first subchannel based on orthogonal frequency division multiplexing access, OFDMA; and
transmitting, by the AP, the second non-legacy fields to a second STA through a second subchannel among the plurality of subchannels in second time resource overlapping with the first time resource,
wherein the second non-legacy fields include second identification information related to the second STA and second channel allocation information related to the second subchannel based on the OFDMA.

2. The method of claim 1, wherein the PPDU header, the first non-legacy fields and the second non-legacy fields are generated based on a single inverse fast Fourier transform, IFFT.

3. The method of claim 1, wherein the PPDU header is generated based on a 64 IFFT and a 1/4 cyclic prefix, CP, portion, and wherein the first non-legacy fields and the second non-legacy fields are generated based on a 256 IFFT and a 1/4 CP portion or 1/16 CP portion.

4. An access point, AP, (1700) that transmits a downlink multi-user, DL MU, Physical layer convergence procedure, PLCP, Protocol Data Unit, PPDU, including a PPDU header, first non-legacy fields, and second non-legacy fields in a wireless local area network, WLAN, the AP (1700) comprising:
a radio frequency, RF, unit (1730) configured to transmit or receive a radio signal; and
a processor (1710) operatively connected to the RF unit (1730),
wherein the processor (1710) is configured to:
transmit the PPDU header including a signal, SIG, field,
wherein the SIG field includes a minimum channel band determining parameter for determining a bandwidth for a plurality of subchannels corresponding to a non-primary channel, wherein the non-primary channel is a secondary 20MHz channel, and wherein the bandwidth corresponds to 20MHz/N when the minimum channel band determining parameter is set to N,
transmit the first non-legacy fields to a first station, STA, through a first subchannel among the plurality of subchannels in a first time resource,
wherein the first non-legacy fields include first identification information related to the first STA and first channel allocation information related to the first subchannel based on orthogonal frequency division multiplexing access, OFDMA, and
transmit the second non-legacy fields to a second STA through a second subchannel among the plurality of subchannels in second time resource overlapping with the first time resource, wherein the second non-legacy fields include second identification information related to the second STA and second channel allocation information related to the second subchannel based on the OFDMA.

5. The AP (1700) of claim 4, wherein the PPDU header, the first non-legacy fields and the second non-legacy fields are generated based on a single inverse fast Fourier transform, IFFT.

6. The AP (1700) of claim 4, wherein the PPDU header is generated based on a 64 IFFT and a 1/4 cyclic prefix, CP, portion, and
wherein the first non-legacy fields and the second non-legacy fields are generated based on a 256 IFFT and a 1/4 CP portion or 1/16 CP portion.

## Patentansprüche

1. Verfahren zum Senden einer Abwärtsstrecken-Mehrbenutzer-Bitübertragungsschichtkonvergenzvorgang-Protokolldateneinheit, DL-MU-PLCP-PPDU, umfassend einen PPDU-Kopf, erster Nicht-Legacy-Felder und zweiter Nicht-Legacy-Felder in einem drahtlosen lokalen Netzwerk, WLAN, wobei das Verfahren umfasst:
Senden des PPDU-Kopfs, umfassend ein Signalfeld, SIG-Feld, durch einen Zugangspunkt, AP,
wobei das SIG-Feld einen Mindestkanalbandbestimmungsparameter zum Bestimmen einer Bandbreite für eine Mehrzahl von Unterkanälen, die einem nichtprimären Kanal entsprechen, umfasst, wobei der nicht-primäre Kanal ein sekundärer 20-MHz-Kanal ist und wobei die Bandbreite 20 MHz/N entspricht, wenn der Mindestkanalbandbestimmungsparameter auf N eingestellt ist;
Senden der ersten Nicht-Legacy-Felder durch den AP an eine erste Station, STA, durch einen ersten Unterkanal von der Mehrzahl von Unterkanälen in einer ersten Zeitressource,
wobei die ersten Nicht-Legacy-Felder eine erste Identifikationsinformation in Bezug auf die erste STA und eine erste Kanalzuordnungsinformation in Bezug auf den ersten Unterkanal auf der Basis eines orthogonalen Frequenzmultiplexverfahrens, OFDMA, umfassen; und
Senden der zweiten Nicht-Legacy-Felder durch den AP an eine zweite STA durch einen zweiten Unterkanal von der Mehrzahl von Unterkanälen in einer zweiten Zeitressource, die sich mit der ersten Zeitressource überschneidet,
wobei die zweiten Nicht-Legacy-Felder eine zweite Identifikationsinformation in Bezug auf die zweite STA und eine zweite Kanalzuordnungsinformation in Bezug auf den zweiten Unterkanal auf der Basis des OFDMA umfassen.

2. Verfahren nach Anspruch 1, wobei der PPDU-Kopf, die ersten Nicht-Legacy-Felder und die zweiten Nicht-Legacy-Felder auf der Basis einer einzigen inversen schnellen Fourier-Transformation, IFFT, erzeugt werden.

3. Verfahren nach Anspruch 1, wobei der PPDU-Kopf auf der Basis einer 64-IFFT und eines 1/4-Zyklisches-Präfix-Abschnitts, 1/4-CP-Abschnitts, erzeugt wird und wobei die ersten Nicht-Legacy-Felder und die zweiten Nicht-Legacy-Felder auf der Basis einer 256-IFFT und eines 1/4-CP-Abschnitts oder 1/16-CP-Abschnitts erzeugt werden.

4. Zugangspunkt, AP (1700), der eine Abwärtsstrecken-Mehrbenutzer-Bitübertragungsschichtkonvergenzvorgang-Protokolldateneinheit, DL-MU-PLCP-PPDU, umfassend einen PPDU-Kopf, erste Nicht-Legacy-Felder und zweite Nicht-Legacy-Felder in einem drahtlosen lokalen Netzwerk, WLAN, sendet, wobei der AP (1700) umfasst:
eine Funkfrequenz-Einheit, RF-Einheit (1730), die dazu konfiguriert ist, ein Funksignal zu senden oder zu empfangen; und
einen Prozessor (1710), der betriebsfähig mit der RF-Einheit (1730) verbunden ist,
wobei der Prozessor (1710) konfiguriert ist zum:
Senden des PPDU-Kopfs, umfassend ein Signalfeld, SIG-Feld,
wobei das SIG-Feld einen Mindestkanalbandbestimmungsparameter zum Bestimmen einer Bandbreite für eine Mehrzahl von Unterkanälen, die einem nichtprimären Kanal entsprechen, umfasst, wobei der nicht-primäre Kanal ein sekundärer 20-MHz-Kanal ist und wobei die Bandbreite 20 MHz/N entspricht, wenn der Mindestkanalbandbestimmungsparameter auf N eingestellt ist,
Senden der ersten Nicht-Legacy-Felder an eine erste Station, STA, durch einen ersten Unterkanal von der Mehrzahl von Unterkanälen in einer ersten Zeitressource,
wobei die ersten Nicht-Legacy-Felder eine erste Identifikationsinformation in Bezug auf die erste STA und eine erste Kanalzuordnungsinformation in Bezug auf den ersten Unterkanal auf der Basis eines orthogonalen Frequenzmultiplexverfahrens, OFDMA, umfassen, und
Senden der zweiten Nicht-Legacy-Felder an eine zweite STA durch einen zweiten Unterkanal von der Mehrzahl von Unterkanälen in einer zweiten Zeitressource, die sich mit der ersten Zeitressource überschneidet, wobei die zweiten Nicht-Legacy-Felder eine zweite Identifikationsinformation in Bezug auf die zweite STA und eine zweite Kanalzuordnungsinformation in Bezug auf den zweiten Unterkanal auf der Basis des OFDMA umfassen.

5. AP (1700) nach Anspruch 4, wobei der PPDU-Kopf, die ersten Nicht-Legacy-Felder und die zweiten Nicht-Legacy-Felder auf der Basis einer einzigen inversen schnellen Fourier-Transformation, IFFT, erzeugt werden.

6. AP (1700) nach Anspruch 4, wobei der PPDU-Kopf auf der Basis einer 64-IFFT und eines 1/4-Zyklisches-Präfix-Abschnitts, 1/4-CP-Abschnitts, erzeugt wird und
wobei die ersten Nicht-Legacy-Felder und die zweiten Nicht-Legacy-Felder auf der Basis einer 256-IFFT und eines 1/4-CP-Abschnitts oder 1/16-CP-Abschnitts erzeugt werden.

## Revendications

1. Procédé de transmission d'une unité de données de protocole, PPDU, de procédure de convergence de couche physique, PLCP, multi-utilisateur en liaison descendante, DL MU, comprenant un en-tête PPDU, des premiers champs non hérités et des seconds champs non hérités dans un réseau local sans fil, WLAN, le procédé comprenant :
la transmission, par un point d'accès, AP, de l'en-tête PPDU comprenant un champ de signal, SIG,
le champ SIG comprenant un paramètre de détermination de bande de canal minimum pour déterminer une bande passante pour une pluralité de sous-canaux correspondant à un canal non primaire, le canal non primaire étant un canal 20 MHz secondaire, et la bande passante correspondant à 20 MHz/N lorsque le paramètre de détermination de bande de canal minimum est défini sur N ;
la transmission, par l'AP, des premiers champs non hérités à une première station, STA, à travers un premier sous-canal parmi la pluralité de sous-canaux dans une première ressource temporelle,
les premiers champs non hérités comprenant des premières informations d'identification liées à la première STA et des premières informations d'attribution de canaux liées au premier sous-canal sur la base d'un accès de multiplexage par répartition en fréquence orthogonale, OFDMA ; et
la transmission, par l'AP, des seconds champs non hérités à une seconde STA à travers un second sous-canal parmi la pluralité de sous-canaux dans une seconde ressource temporelle chevauchant la première ressource temporelle,
les seconds champs non hérités comprenant des secondes informations d'identification liées à la seconde STA et des secondes informations d'attribution de canaux liées au second sous-canal sur la base de l'OFDMA.

2. Procédé selon la revendication 1, dans lequel l'en-tête PPDU, les premiers champs non hérités et les seconds champs non hérités sont générés sur la base d'une transformée de Fourier rapide inverse, IFFT, unique.

3. Procédé selon la revendication 1, dans lequel l'en-tête PPDU est généré sur la base d'une IFFT 64 et d'un quart de préfixe cyclique, CP, et les premiers champs non hérités et les seconds champs non hérités étant générés sur la base d'une IFFT 256 et d'un quart de CP ou d'un seizième de CP.

4. Point d'accès, AP, (1700) qui transmet une unité de données de protocole, PPDU, de procédure de convergence de couche physique, PLCP, multi-utilisateur en liaison descendante, DL MU, comprenant un en-tête PPDU, des premiers champs non hérités et des seconds champs non hérités dans un réseau local sans fil, WLAN, l'AP (1700) comprenant :
une unité radiofréquence (RF) (1730) configurée pour transmettre ou recevoir un signal radio ; et
un processeur (1710) relié de manière fonctionnelle à l'unité RF (1730),
le processeur (1710) étant configuré pour :
transmettre l'en-tête PPDU comprenant un champ de signal, SIG,
le champ SIG comprenant un paramètre de détermination de bande de canal minimum pour déterminer une bande passante pour une pluralité de sous-canaux correspondant à un canal non primaire, le canal non primaire étant un canal 20 MHz secondaire, et la bande passante correspondant à 20 MHz/N lorsque le paramètre de détermination de bande de canal minimum est défini sur N,
transmettre les premiers champs non hérités à une première station, STA, à travers un premier sous-canal parmi la pluralité de sous-canaux dans une première ressource temporelle,
les premiers champs non hérités comprenant des premières informations d'identification liées à la première STA et des premières informations d'attribution de canaux liées au premier sous-canal sur la base d'un accès de multiplexage par répartition en fréquence orthogonale, OFDMA, et
transmettre les seconds champs non hérités à une seconde STA à travers un second sous-canal parmi la pluralité de sous-canaux dans une seconde ressource temporelle chevauchant la première ressource temporelle, les seconds champs non hérités comprenant des secondes informations d'identification liées à la seconde STA et des secondes informations d'attribution de canaux liées au second sous-canal sur la base de l'OFDMA.

5. AP (1700) selon la revendication 4, dans lequel l'en-tête PPDU, les premiers champs non hérités et les seconds champs non hérités sont générés sur la base d'une transformée de Fourier rapide inverse, IFFT, unique.

6. AP (1700) selon la revendication 4, dans lequel l'en-tête PPDU est généré sur la base d'une IFFT 64 et d'un quart de préfixe cyclique, CP, et
les premiers champs non hérités et les seconds champs non hérités étant générés sur la base d'une IFFT 256 et d'un quart de CP ou d'un seizième de CP.
